# EUROPEAN PATENT APPLICATION

(11) **EP 4 346 062 A1**
(43) Date of publication of application: **03.04.2024**
(21) Application number: 23806662.5
(22) Date of filing: 17.04.2023
(51) Int. Cl.: H02J 7/34, H01M 10/44

(54) **SCALABLE ENERGY STORAGE SYSTEM AND SCALING METHOD THEREOF**

(30) Priority: 18.05.2022 CN 202210538432
(71) Applicant: SHENZHEN POWEROAK NEWENER CO., LTD, Shenzhen, Guangdong 518000 (CN)
(72) Inventor: LEI, Jianhua, Shenzhen, Guangdong 518000 (CN); MENG, Zhongping, Shenzhen, Guangdong 518000 (CN); QIN, Geng, Shenzhen, Guangdong 518000 (CN)
(74) Representative: Ipside
(86) International application number: PCT/CN2023/088662
(87) International publication number: WO 2023/221709

(57) **Abstract**

Embodiments of the present application relate to the technical field of energy storage, and disclose an expandable energy storage system and an expansion method thereof. The system includes an inverter system provided with a built-in battery, external batteries and a switching compensation circuit, wherein each of the external batteries is communicatively connected with the inverter system through a hot-plug connection line. Each of the external batteries is further connected with the built-in battery through the switching compensation circuit. The inverter system is configured to turn off a charging tube of the built-in battery and turn on a discharging tube of the built-in battery when the electric quantity of the built-in battery is lower than a preset electric quantity. The switching compensation circuit is configured to control the external battery to be connected with the built-in battery when the electric quantity of the built-in battery is lower than the preset electric quantity and the electric quantity of the external battery is higher than the electric quantity of the built-in battery. In this way, the energy storage system provided according to the embodiment of the present application can realize parallel expansion of batteries and hot-plug connection of the external batteries so that the system has a simple structure and high safety.

## Description

### CROSS-REFERENCE TO RELATED APPLICATION

The present application claims priority to Chinese Patent Application No. 202210538432.2, filed with the Chinese Patent Office on May 18, 2022 and entitled "AN EXPANDABLE ENERGY STORAGE SYSTEM AND EXPANSION METHOD THEREOF", the entirety of which is incorporated herein by reference.

### Technical Field

An embodiment of the present application relates to the technical field of energy storage, and in particular, relates to an expandable energy storage system and an expansion method thereof.

### Background of the Invention

At present, the development of energy storage inverter power supply has entered a growth period, and various technologies ranging from large energy storage power stations, household energy storage inverters to small portable energy storage inverters have been applied into practice. With the constant updating and iterating of technology, the problem in the art of insufficient battery capacity has become increasingly prominent because of the contradiction between people's demand for service power and service time of the portable energy storage power supply and the current low energy density of batteries.

As is well known, the main body of the portable energy storage power supply is the battery, which accounts for most of the weight of the whole system. However, since the portable energy storage power supply is characterized by its convenience and portability, it is impossible to increase the battery pack under the same weight. Therefore, the problem of insufficient battery capacity can be effectively solved by adopting parallel connection of whole machines or parallel connection of batteries. During implementing the embodiment of the present application, the inventors have found that there are at least the following problems in the above related technologies. There are many ways to achieve parallel connection of whole machines or parallel connection of batteries. At present, the main scheme is to provide a switch on the external battery, and the switch can only be switched on to make the external battery connected in parallel after the electric quantity of the external battery is consistent with the electric quantity of another battery; and otherwise, a very large collision current will be generated such that the battery will get damaged. In this way, power failure is likely to occur to the system when the system is connected with loads, and it is impossible to realize hot plug of external batteries.

### Summary of the Invention

An embodiment of the present application provides an expandable energy storage system and an expansion method thereof.

The objective of the embodiment of the present application is realized through the following technical solutions.

In order to solve the above technical problems, in a first aspect, an embodiment of the present application provides an expandable energy storage system which includes: an inverter system, being provided with a built-in battery; at least one external batteries, each of which being communicatively connected with the inverter system through a hot-plug connection line; at least one switching compensation circuits, through which each of the external batteries further being connected with the built-in battery; the inverter system is configured to turn off a charging tube of the built-in battery and turn on a discharging tube of the built-in battery when the electric quantity of the built-in battery is lower than a preset electric quantity; the switching compensation circuit is configured to control the external battery to be connected with the built-in battery when the electric quantity of the built-in battery is lower than the preset electric quantity and the electric quantity of the external battery is higher than the electric quantity of the built-in battery.

In some embodiments, the switching compensation circuit includes: an switching transition compensation module, being connected between the built-in battery and the external battery; a battery main switch module, being connected between a negative electrode of the built-in battery and a negative electrode of the external battery; a controller, being connected with a control end of the switching transition compensation module and a control end of the battery main switch module respectively, and being configured to control the conduction states of the switching transition compensation module and the battery main switch module respectively according to the electric quantity state of the built-in battery.

In some embodiments, the switching transition compensation module includes: a flywheel diode, having a cathode connected between a positive electrode of the built-in battery and a positive electrode of the external battery; an inductor, having one end connected with an anode of the flywheel diode and the other end connected with the negative electrode of the external battery; a unidirectional diode, having an anode connected with one end of the inductor; a first switch tube, having a drain connected with an cathode of the unidirectional diode, a source connected with the negative electrode of the built-in battery, and a gate connected with the controller, wherein the controller is configured to drive the first switch tube to be turned on when the electric quantity of the built-in battery is lower than the preset electric quantity and the electric quantity of the external battery is higher than the electric quantity of the built-in battery.

In some embodiments, the switching transition compensation module further includes: a first resistor, being connected between the source and the gate of the first switch tube; a second resistor, being connected between the controller and the gate of the first switch tube.

In some embodiments, the battery main switch module includes: a second switch tube, having a source connected with the negative electrode of the built-in battery and a gate connected with the controller, the second switch tube is configured to be turned on when the external battery charges the built-in battery; a third switch tube, having a source connected with the negative electrode of the external battery, a gate connected with the controller, and a drain connected with the drain of the second switch tube, and the third switch tube is configured to be turned on when the built-in battery supplies power.

In some embodiments, the controller is configured to output a PWM signal to the switching transition compensation module so as to control the conduction state and output voltage of the switching transition compensation module; wherein when the electric quantity of the built-in battery is lower than the preset electric quantity, the controller gradually increases the duty ratio of the PWM signal within a preset time, and controls the battery main switch module to be in a closed state after the duty ratio reaches 100% so that the external battery is completely connected to the inverter system.

In some embodiments, when the external battery is discharged to the extent that the electric quantity thereof is consistent with the electric quantity of the built-in battery, the inverter system controls the charging tube of the built-in battery to be turned on so that the built-in battery and the external battery are connected in parallel.

In order to solve the aforesaid technical problems, in a second aspect, an embodiment of the present application provides an expansion method of an energy storage system which is applied to the energy storage system as described above in the first aspect, and the method includes: determining whether the electric quantity of the built-in battery is lower than a preset electric quantity; turning off the charging tube of the built-in battery and turning on the discharging tube of the built-in battery by the inverter system when the electric quantity of the built-in battery is lower than the preset electric quantity; determining whether the electric quantity of the built-in battery is lower than the electric quantity of the external battery; and controlling the external battery to be connected with the built-in battery through the switching compensation circuit when the electric quantity of the built-in battery is lower than the electric quantity of the external battery.

In some embodiments, when at least two external batteries are provided, the method further includes: determining whether the electric quantity of the external battery currently supplying power is lower than the electric quantity of the built-in battery; when the electric quantity of the external battery currently supplying power is lower than the electric quantity of the built-in battery, acquiring other external batteries with higher electric quantity than the built-in battery and establishing connection through the switching compensation circuit.

In some embodiments, the step of controlling the external battery to be connected with the built-in battery through the switching compensation circuit includes: when the electric quantity of the built-in battery is lower than the preset electric quantity, gradually increasing the duty ratio of a PWM signal within a preset time by the switching compensation circuit, and controlling the external battery to be completely connected to the inverter system by the switching compensation circuit after the duty ratio reaches 100%.

As compared to the prior art, beneficial effects of the present application are as follows: different from the prior art, the embodiment of the present application provides an expandable energy storage system and an expansion method thereof, the system includes an inverter system provided with a built-in battery, external batteries and a switching compensation circuit, wherein each of the external batteries is communicatively connected with the inverter system through a hot-plug connection line. Each of the external batteries is further connected with the built-in battery through the switching compensation circuit. The inverter system is configured to turn off a charging tube of the built-in battery and turn on a discharging tube of the built-in battery when the electric quantity of the built-in battery is lower than a preset electric quantity. The switching compensation circuit is configured to control the external battery to be connected with the built-in battery when the electric quantity of the built-in battery is lower than the preset electric quantity and the electric quantity of the external battery is higher than the electric quantity of the built-in battery. In this way, the energy storage system provided according to the embodiment of the present application can realize parallel expansion of batteries and hot-plug connection of external batteries so that the system has a simple structure and high safety.

### Brief Description of the Drawings

One or more embodiments are illustrated by pictures in corresponding attached drawings, and this does not constitute limitation on the embodiments. Elements/modules and steps with the same reference numerals in the attached drawings are indicated as similar elements/modules and steps, and the pictures in the attached drawings do not constitute scale limitation unless otherwise stated particularly.
FIG. 1 is a schematic structural diagram of an expandable energy storage system according to a first embodiment of the present application.
FIG. 2 is a schematic view of the electrical structure of an expandable energy storage system according to the first embodiment of the present application.
FIG. 3 is a schematic view of the electrical structure of a switching compensation circuit according to the first embodiment of the present application.
FIG. 4 is a schematic flowchart diagram of an expansion method of an energy storage system according to a second embodiment of the present application.
FIG. 5 is a schematic flowchart diagram of another expansion method of an energy storage system according to the second embodiment of the present application.

### Detailed Description of the Embodiments

Hereinafter, the present application will be described in detail with reference to specific embodiments. The following embodiments will facilitate further appreciation of the present application by those skilled in the art, but they are not intended to limit the present application in any way. It shall be noted that, several modifications and improvements can be made by those of ordinary skill in the art without departing from the concept of the present application. All these modifications and improvements belong to the scope claimed in the present application.

In order to make objectives, technical solutions and advantages of the present application clearer, the present application will be further described in detail hereinafter with reference to attached drawings and embodiments. It shall be appreciated that, the specific embodiments described herein are only used to explain the present application, and are not used to limit the present application.

It shall be noted that, various features in the embodiments of the present application may be combined with each other without conflict, and all the combinations are within the scope claimed in the present application. In addition, although functional module division is made in the schematic diagrams of the device and logical sequences are shown in the flowchart diagrams, in some cases, the steps shown or described may be executed with module division and sequences different from those in the schematic diagrams of the device and the flowchart diagrams. It shall be noted that when an element is described to be "connected" to another element, it may be directly connected to another element, or there may be one or more intervening elements therebetween.

Unless otherwise defined, all technical and scientific terms used in this specification have the same meanings as commonly understood by those skilled in the art of the present application. The terms used in the specification of the present application in the present specification are only for the purpose of describing specific embodiments, and are not intended to limit the present application. The term "and/or" used in this specification includes any and all combinations of one or more associated items listed.

In addition, technical features involved in various embodiments of the present application described below can be combined with each other as long as they do not conflict with each other.

Specifically, the embodiments of the present application will be further described below with reference to the attached drawings.

### First embodiment

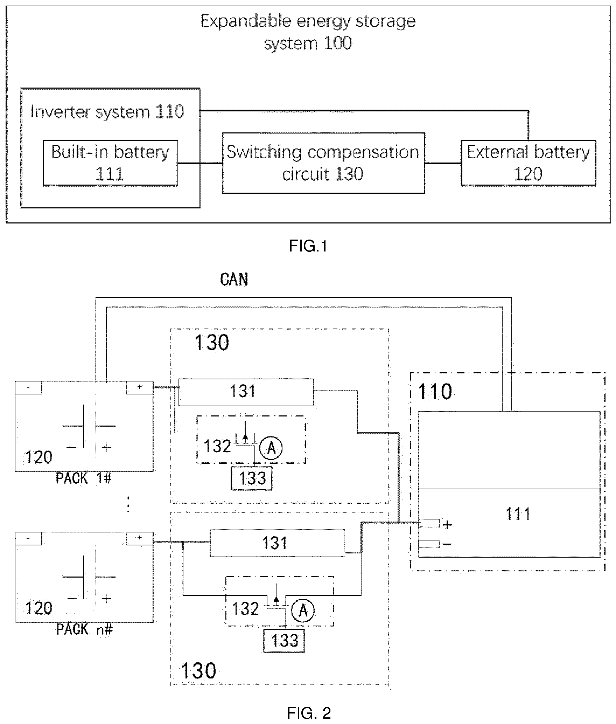

An embodiment of the present application provides an expandable energy storage system. Referring to FIG. 1, FIG. 1 shows the structure of an expandable energy storage system 100 provided according to the embodiment of the present application. The expandable energy storage system 100 includes an inverter system 110, an external battery 120 and a switching compensation circuit 130.

The inverter system 110 is provided with a built-in battery 111, and the inverter system 110is configured to turn off a charging tube of the built-in battery 11and turn on a discharging tube of the built-in battery 111 when the electric quantity of the built-in battery 111 is lower than a preset electric quantity. The inverter system 110 is an energy storage apparatus with small volume and light weight, which is suitable for users to carry around. For example, the inverter system may be a portable energy storage power supply, the inverter system is provided with a built-in battery and an inverter circuit, and the built-in battery is connected with the inverter circuit. The inverter circuit is used to invert the output voltage of the built-in battery to supply power to the load, and it is also used to invert an externally connected power supply into direct current for charging the built-in battery. The electric capacity and type of the built-in battery 111 may be set according to general needs of users on the market. For example, according to the jurisdiction setting of air consignment goods, the electric capacity may be set below 10,000 mA and the built-in battery 111 may be set by selecting a battery type with high energy density such as a lithium battery. Specifically, the internal structure and appearance of the inverter system 110 may be set according to actual needs and market demands or the like, and the specific structure of the built-in battery 111 is not limited by the embodiment of the present application. The inverter system 110 can adjust the voltage of the external battery 120 to the charging voltage of the built-in battery 111 so as to supply power to the built-in battery 111 safely and stably. The structure of the inverter system 110 may be designed according to the actual voltage transformation needs. The inverter system 110 is further communicatively connected with the external battery 120 through a hot-plug connection line to determine whether to connect the external battery 120 to the inverter system 110 or whether to acquire the electric quantity of the external battery 120.The hot-plug connection line may be a communication bus supporting hot plug such as a CAN bus or the like, and it may be selected depending on actual need. It shall be noted that the built-in battery described in this embodiment may be a battery built in the inverter system, i.e., a battery built in the energy storage system; or the built-in battery may also be a battery connected to the energy storage system, and the battery is in a normal power supplying state.

The number of the external battery 120 is at least one, and each external battery 120 is communicatively connected with the inverter system 110 through a hot-plug connection line. A positive electrode of each external battery 120 is connected with a positive electrode of the built-in battery 111, and each external battery 120 is communicatively connected with the inverter system 110 through a hot-plug connection line. The external battery 120 is an apparatus or device capable of storing electric energy which is independent of the inverter system 110 and has a separate package and design, and the external battery 120 may have settings which are the same as or different from the structure of the built-in battery 111.Usersmay supply power to the load and/or the built-in battery 111 by connecting the external battery 120 to the inverter system 110, and users may also set the number of the external battery 120 according to actual needs, and meanwhile provide the inverter system 110 with sockets in the same number as that of the external batteries 120 which can be connected at the same time. Specifically, the internal structure, appearance, quantity or the like of the external battery 120 may be set according to actual needs and market demands. It shall be noted that the external battery 120 is a hot-pluggable apparatus, i.e., an apparatus that can be inserted or removed without cutting off the power. That is, the inverter system 110 may be connected to the external battery 120 without cutting off the power supply, thereby realizing the flexible use of the apparatus in different usage scenarios.

Further speaking, the hot-plug connection line may also be provided with a self-locking module, and the switching compensation circuit 130 cuts off the electrical connection of the hot-plug connection line after receiving a release signal sent by the self-locking module. Specifically, the hot-plug connection line may be a specially-made line having a plug with self-locking function. When the key on the plug is pressed, a trigger signal is sent to the corresponding external battery to indicate that the user wants to quit the external battery, so the main switch of the external battery needs to be disconnected immediately, thereby preventing the risk of arcing and sparking when pulling out the external battery so that the user can safely pull out the battery.

The inverter system is configured to turn off the charging tube of the built-in battery and turn on the discharging tube of the built-in battery when the electric quantity of the built-in battery is lower than a preset electric quantity. Specifically, when the electric quantity of the built-in battery is lower than the preset electric quantity, it means that the electric quantity of the built-in battery is lower than the set value. At this time, when it is detected that the external battery has been connected with the inverter system, it enters the state where the external battery is ready to be connected, and at this point, the operation of turning off the charging tube of the built-in battery and turning on the discharging tube of the built-in battery can prevent the external battery from charging the built-in battery to generate circulating current and meanwhile ensure the normal operation of the energized load.

The switching compensation circuit 130 is configured to control the external battery 120 to be connected with the built-in battery 111 when the electric quantity of the built-in battery 111 is lower than the preset electric quantity and the electric quantity of the external battery 120 is higher than the electric quantity of the built-in battery 111.The switching compensation circuit 130 is a circuit module capable of controlling the connection between the external battery 120 and the built-in battery 111.The negative electrode of each external battery 120 is connected with the negative electrode of the built-in battery 111 through the switching compensation circuit 130, and the switching compensation circuit 130 is configured to connect the external battery 120 with the built-in battery 111 after the electric quantity of the built-in battery 111 is lower than the electric quantity of the external battery 120 and the external battery 120 has established communication connection with the inverter system 110.Specifically, in this embodiment, the switching compensation circuit is configured to control the external battery 120 to be connected with the built-in battery 111.At this point, it is switched to supplying power to the inverter system from the external battery instead of supplying power to the inverter circuit in the inverter system from the built-in battery, thereby realizing the hot plug of the external battery without cutting off the power. Moreover, when the external battery is connected to the inverter system, the external battery can be prevented from charging the built-in battery so as to avoid the generation of circulating current surge because the charging tube of the built-in battery is turned off. In addition, although the discharging tube of the built-in battery is in a closed state, the output of the built-in battery is suppressed because the voltage of the external battery is higher than that of the built-in battery, and thus the external battery normally supplies power to the inverter circuit or the load. Further speaking, when the external battery is discharged so that the electric quantity thereof is consistent with the electric quantity of the built-in battery, the external battery and the built-in battery are connected in parallel to supply power to the inverter circuit or the load together. The energy storage system 100 provided according to the embodiment of the present application realizes the parallel connection and hot plug of the external batteries 120.As compared to the traditional mode for capacity expansion of batteries, the energy storage system 100 enables users to replace the externally expanded external battery 120 at any time depending on the actual situation. Moreover, the energy storage system 100can ensure that the currently running apparatus is not interrupted, and the power supply will not be interrupted as long as the standby external battery 120 is connected, thereby eliminating the trouble of power failure and enabling users to replace the battery pack safely and quickly. At the same time, the energy storage system 100 also provides convenience for the later maintenance of the external battery 120 so that it is safe, reliable and easy to use.

In some embodiments, referring to FIG. 2, FIG. 2 shows the circuit structure of an expandable energy storage system provided according to an embodiment of the present application. The number of the switching compensation circuits 130 is the same as that of the external batteries 120, and one of the external batteries 120 is connected to the inverter system 110 through corresponding one of the switching compensation circuits 130, and the switching compensation circuit 130 includes: an switching transition compensation module 131being connected between the built-in battery 111 and the external battery 120; a battery main switch module 132, being connected between the negative electrode of the built-in battery 111 and the negative electrode of the external battery 120; a controller 133, being respectively connected with the control end of the switching transition compensation module 131 and the control end of the battery main switch module 132.The controller 133 is configured to respectively control the conduction state of the switching transition compensation module 131 and the battery main switch module 132 according to the electric quantity state of the built-in battery 111, and the detection end of the controller 133 is respectively connected with the built-in battery 111 and the external battery 120.

In one embodiment, the battery main switch module is configured to control the external battery 120 to be connected with the built-in battery 111 so that it is switched to supplying power to the inverter system from the external battery. The switching transition compensation module is configured to compensate the battery main switch module when the battery main switch module is switched, so that the voltage difference between two ends of the switch tube of the battery main switch module is within 1V, thereby reducing the influence of surge current peaks on the switch tube, prolonging the service life of the switch tube, and realizing seamless switching of external batteries. That is, it can ensure that it is switched to supplying power from the external battery when the internal battery normally supplies power, so that power failure of the load during the switching process is avoided.

It shall be noted that in FIG. 2, two external batteries 120 and two switching compensation circuits 130 are taken as examples. Moreover, the case where the communication connection is realized by using a Controller Area Network (CAN) communication bus CANas the hot-plug connection line is taken as an example. In some other embodiments, the type, structure and quantity of various modules and elements may be set depending on actual needs instead of being limited to those described in the embodiment and FIG. 2of the present application.

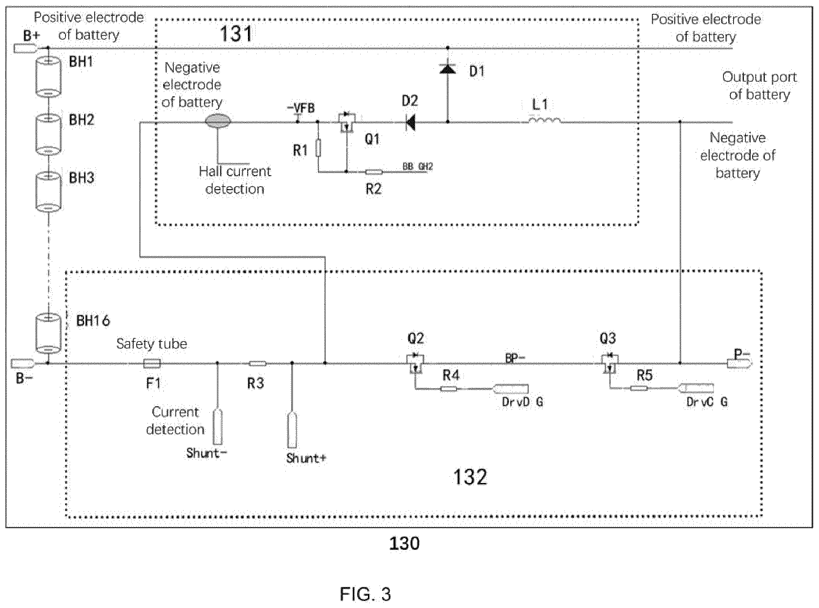

Specifically, referring to FIG. 3, FIG. 3 shows the circuit structure of the switching compensation circuit 130 provided according to an embodiment of the present application. The switching compensation circuit 130 adopts a one-way BUCK circuit to realize safe switching and active balancing of the external battery 120.The switching transition compensation module 131includes: a flywheel diode D1, having a cathode connected between a positive electrode B+ of the built-in battery 111 and a positive electrode P+ of the external battery 120;an inductor L1, having one end connected with an anode of the flywheel diode D1 and the other end connected with the negative electrode P- of the external battery 120;a unidirectional diode D2, having an anode connected with one end of the inductor L1;a first switch tube Q1, having a drain connected with an cathode of the unidirectional diode D2, a source connected with the negative electrode B- of the built-in battery 111, and a gate connected with the controller 133,wherein the controller 133 is configured to drive the first switch tube Q1 to be turned on when the electric quantity of the built-in battery 111 is lower than the preset electric quantity and the electric quantity of the external battery 120 is higher than the electric quantity of the built-in battery 111.

Moreover, still referring to FIG. 3, the switching transition compensation module 131 further includes: a first resistor R1, being connected between the source and the gate of the first switch tube Q1, wherein the first switch tube Q1isa field effect tube; and a second resistor R2,being connected between the controller 133 and the gate of the first switch tube Q1.

Moreover, still referring to FIG. 3, the battery main switch module 132 includes: a second switch tube Q2, having a source connected with the negative electrode B-of the built-in battery 111 and a gate connected with the controller 133, wherein the second switch tube Q2is configured to be turned on when the external battery 120 charges the built-in battery 111, and the second switch tube Q2 is a charging tube and is a field effect tube; a third switch tube Q3, having a source connected with the negative electrode P- of the external battery 120, a gate connected with the controller 133, and a drain connected with the drain of the second switch tube Q2, wherein the third switch tube Q3 is configured to be turned on when the built-in battery 111supplies power, and the third switch tube Q3 is a discharging tube and is a field effect tube. In the embodiment of the present application, switching between charging and power supplying for the built-in battery 111 is realized by turning on or turning off the second switch tube Q2 or the third switch tube Q3.

In some embodiments, still referring to FIG. 3, the controller 133 is configured to output a PWM signal to the switching transition compensation module 131 to control the conduction state and the output voltage of the switching transition compensation module 131.When the electric quantity of the built-in battery 111 is lower than the preset electric quantity, the controller 133 gradually increases the duty ratio of the PWM signal within a preset time, and after the duty ratio reaches 100%, the controller 133 controls the battery main switch module 132 to be in a closed state so that the external battery 120 is completely connected to the inverter system 110.When the external battery 120 is discharged so that the electric quantity thereof is consistent with the electric quantity of the internal battery 111, the inverter system 110 controls the charging tube of the internal battery 111 to be turned on so that the internal battery 111 and the external battery 120 are connected in parallel. The controller 133 can realize the connection of the external battery 120 by adjusting the duty ratio of the first switch tube Q1, the second switch tube Q2 and the third switch tube Q3, thereby seamlessly switching to supplying power to the load from the external battery. Specifically, the duty ratio of the first switch tube Q1, the second switch tube Q2 and the third switch tube Q3 is gradually increased from zero to 100% within a preset time range, so that the voltage difference between two ends of the second switch tube Q2 and the third switch tube Q3 connected in series is limited within 1V, thereby reducing the surge current peaks, prolonging the service life of the switch tube, and ensuring smooth battery switching.

Moreover, still referring to FIG. 3, the battery main switch module 132 further includes: a safety tube F1, having one end connected with the negative electrode B-of the built-in battery 111; and a third resistor R3, being connected between the other end of the safety tube F1 and the source of the second switch tube Q2.

Moreover, still referring to FIG. 3, the source of the first switch tube Q1 is further connected with the source of the second switch tube Q2, and the Hall current detection end of the controller 133 is connected between the source of the first switch tube Q1 and the source of the second switch tube Q2.

During practical operation of the energy storage system 100 provided according to the embodiment of the present application, first after the controller 133 detects to learn the electric quantities of the built-in battery 111 and the external battery 120, and determines that the electric quantity of the built-in battery 111 is lower than that of the external battery 120 and the electric quantity of the built-in battery 111 is lower than the preset electric quantity (e.g., lower than 5V), the controller 133 controls the main switch of the battery so that the second switch tube Q2 is pulled to be turned on to realize switching. Further speaking, in the case where there are a plurality of external batteries 120, when the built-in battery 111 has remaining power, the external battery 120 is mainly used for supplying power, and the electric quantity of the external battery 120 currently supplying power drops to be consistent with the built-in battery 111, the external battery 120 and the built-in battery 111 are connected in parallel to realize complete charging and complete discharging. Further speaking, when the system is not connected with a load, i.e., when the system does not supply power to any load, the newly connected external battery 120 is actively balanced to charge the built-in battery 111 at the maximum current (e.g., 10A), and after the external battery 120 is balanced with the built-in battery 111, the external battery 120 and the built-in battery 111will be connected in parallel to be completely charged and discharged by the system.

The switching compensation circuit 130 provided according to the embodiment of the present application can make full use of the inductance saturation characteristic when the high-voltage side of the battery (the newly connected external battery 120) supplies power to the low-voltage side (the built-in battery 111 of the system) so as to realize large current output in a short time, that is, to bear all the loads of the system in 200ms, thereby ensuring smooth battery switching. When the external battery 120 is connected, the difference between the voltage of the external battery 120 when it is completely discharged and the voltage of the external battery 120 when it is fully charged is around20V at most, and in combination with the inductance saturation characteristic, the inductance design may be made extremely small so that the cost is low. Moreover, in the example shown in FIG. 3, the main MOS switch tube is placed at the negative port of the battery, so there is no need to provide an isolated driving circuit for the MOS switch tube, which further reduces the cost and facilitates the layout of the PCB.200ms described above is the switching time during which the voltage difference between batteries can reach the preset threshold (i.e., within 5V), and meanwhile, the time is not too long so that the MOS tube will not be overheated and damaged, therebyrealizing 10A current balance.

### Second embodiment

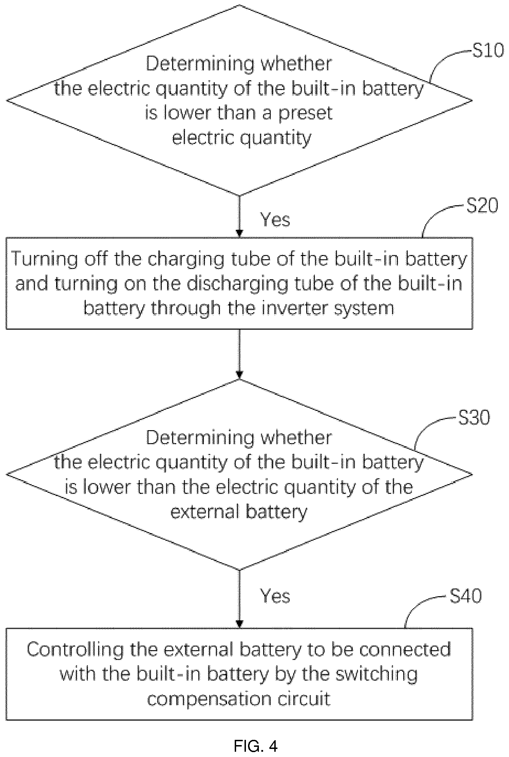

An embodiment of the present application provides an expansion method of an energy storage system, which may be applied to the expandable energy storage system as described in the first embodiment above. Referring to FIG. 4, FIG. 4shows a flow process of an expansion method of an energy storage system provided according to an embodiment of the present application, and the method includes but is not limited to the following steps:
Step S10:determining whether the electric quantity of the built-in battery is lower than a preset electric quantity; and skipping to step S20 when the electric quantity of the built-in battery is lower than the preset electric quantity.

In the embodiment of the present application, first the electric quantity of the built-in battery needs to be collected, and then it is determined whether the electric quantity of the built-in battery is lower than a preset electric quantity. when the electric quantity of the built-in battery is lower than the preset electric quantity, then it means that the power is about to run out and the built-in battery needs to be charged, and at this time, the method skips to step S20. when the electric quantity of the built-in battery is not lower than the preset electric quantity, then the electric quantity of the built-in battery keeps being monitored. The preset electric quantity may be set according to the actual need for battery protection and the need for electric energy by the load requiring uninterruptible power supply. Specifically, the electric quantity of the built-in battery may be detected by devices or apparatuses such as an electric meter to determine the electric energy of the built-in battery, and meanwhile, expansion may be realized by adopting the structure as shown in the first embodiment and in FIG. 1, FIG. 2 and FIG. 3 above.

It shall be noted that when the expansion method provided according to the embodiment of the present application is applied to the energy storage system described in the first embodiment above, the expansion method is preferentially applied to the main control chip or the controller of the energy storage system, the main control chip or the controller includes a processor and a memory, and the memory stores instructions executable by the processor so that the processor can execute the expansion method provided according to this embodiment. The memory may be a computer-readable storage medium which may be included in a computer program product, and the computer-readable storage medium stores computer-executable instructions which enable a computer to execute the expansion method provided according to the embodiment of the present application.

Step S20:turning off the charging tube of the built-in battery and turning on the discharging tube of the built-in battery through the inverter system.

In the embodiment of the present application, when the electric quantity of the built-in battery is lower than the preset electric quantity, it is determined that the built-in battery needs to be charged, or an external battery is required to supply power to the load. At this time, the charging tube of the built-in battery is turned off and the discharging tube of the built-in battery is turned on by the inverter system, so that the built-in battery stops discharging and starts to be charged.

Step S30:determining whether the electric quantity of the built-in battery is lower than the electric quantity of the external battery; and skipping to step S40 when the electric quantity of the built-in battery is lower than the electric quantity of the external battery.

After it is determined that the built-in battery needs to be charged, the discharging tube of the built-in circuit is turned off to stop discharging, and the charging tube of the built-in battery is turned on to prepare for being charged, it is required to further determine whether the electric quantity of the built-in battery is lower than the electric quantity of the external battery so as to determine whether the external battery to be connected to the built-in battery can form a voltage difference with the built-in battery to charge the built-in battery, and the method skips to step S40 when it is determined that the electric quantity of the built-in battery is lower than the electric quantity of the external battery.

Further speaking, when the electric quantity of the built-in battery is lower than the electric quantity of the external battery, the communication connection between the external battery and the inverter system is established through the hot-plug connection line so that the external battery is connected in a hot plug manner. In this way, when a plurality of external batteries are provided, the external battery may be replaced at any time without stopping the operation of the whole system.

Furthermore, it may also first be determined whether any external battery has established communication connection with the inverter system, so as to determine whether any external battery is available to be connected. Specifically, the communication connection may be realized by wired or wireless communication, and the available external battery may be determined by receiving a signal indicating accessibility sent by the external battery. Further speaking, the external battery may also send electric quantity information thereof to the portable energy storage power supply, or the electric quantity of the external battery with which the communication connection is established may be monitored through devices such as an electric meter inside the portable energy storage power supply, so as to facilitate the management of the whole energy storage system. Specifically, this may be set depending on actual needs.

Step S40: controlling the external battery to be connected with the built-in battery by the switching compensation circuit.

In the embodiment of the present application, after it is detected that the electric quantity of the built-in battery is lower than the electric quantity of the external battery, the switching compensation circuit controls the connection state of the external battery by controlling the duty ratio of the switch tube, and adjusts the voltage output by the external battery to provide the charging voltage that can be used by the built-in battery.

Furthermore, in order to realize smooth starting, reduce starting current and avoid starting over-current tripping, the switching compensation circuit may also realize the parallel connection of the external battery with the built-in battery by adjusting the duty ratio of the switch tube control signal. Specifically, the step of controlling the external battery to be connected with the built-in battery through the switching compensation circuit includes: when the electric quantity of the built-in battery is lower than the preset electric quantity, gradually increasing the duty ratio of the PWM signal within a preset time by the switching compensation circuit, and controlling the external battery to be completely connected to the inverter system after the duty ratio reaches 100%by the switching compensation circuit. For example, when the preset time is 200ms, the duty ratio of the PWM signal is gradually increased within 200ms until the duty ratio reaches 100%, that is, the duty ratio of the PWM signal is gradually increased from zero within 200ms, and after the duty ratio is increased to 100%, the external battery is controlled to be completely connected to the inverter system, thereby realizing seamless switching of the power supplying state of the external battery and the built-in battery. It shall be noted that, by setting the preset time to 200ms and making full use of the inductance saturation characteristic to realize large current output in a short time, that is, to bear all the loads of the system in 200ms, smooth battery switching is ensured. In this way, the case where the pressure difference between two ends of the switch tube is less than 1V due to insufficient time for incorporation is avoided; and moreover, the case where the switch tube is overheated and damaged because the time is too long is also avoided. The preset time range and the like may beset according to the component capability of the circuit in the actual scene, which is not limited by the embodiments of the present application.

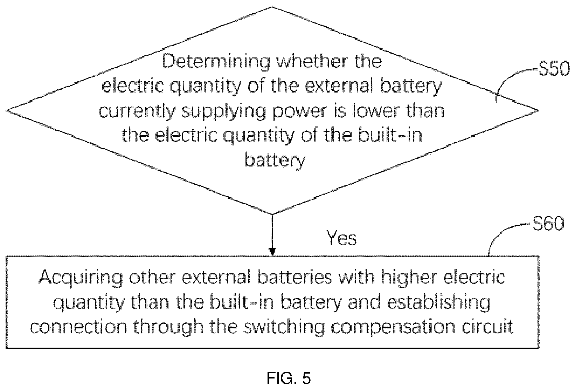

In some embodiments, in the case where at least two external batteries are provided, reference is made to FIG. 5, FIG. 5 shows the flow process of another expansion method of an energy storage system provided according to an embodiment of the present application, and the method further includes:
Step S50: determining whether the electric quantity of the external battery currently supplying power is lower than the electric quantity of the built-in battery; and skipping to step S60 when the electric quantity of the external battery currently supplying power is lower than the electric quantity of the built-in battery.

In the embodiment of the present application, when a plurality of external batteries are provided, each time only one external battery is required to be connected in parallel with the built-in battery and/or the load for power supplying, and when the power of the external battery that is supplying power is about to run out, it is required to switch to other external batteries with electricity in time to continue the power supplying. Therefore, it is required to determine whether the electric quantity of the external battery currently supplying power is lower than the electric quantity of the built-in battery, and the method skips to step S60 when the electric quantity of the external battery currently supplying power is lower than the electric quantity of the built-in battery; and otherwise, the electric quantity of the external battery currently supplying power keeps being monitored until it is detected that the electric quantity of the external battery currently supplying power is lower than the electric quantity of the built-in battery. When it is determined that the electric quantity of the external battery currently supplying power is lower than the electric quantity of the built-in battery, it means that the power of the external battery currently supplying power is about to run out, and at this point it is necessary to switch to other external batteries to continue the power supplying. Specifically, the electric quantity of the external battery currently supplying power may be detected by devices or apparatuses such as an electric meter to determine the electric energy of the external battery currently supplying power.

Step S60: acquiring other external batteries with higher electric quantity than the built-in battery and establishing connection through the switching compensation circuit.

In the embodiment of the present application, after acquiring other external batteries with higher electric quantity than the built-in battery, the electrical connection between the external battery that is about to run out of power and the built-in battery is cut off through the corresponding switching compensation circuit, and the electrical connection between anew external battery and the built-in battery is established through the corresponding switching compensation circuit, thereby realizing the switching of the connected external battery.

The embodiment of the present application provides an expandable energy storage system and an expansion method thereof, the system includes an inverter system provided with a built-in battery, external batteries and a switching compensation circuit, wherein each of the external batteries is communicatively connected with the inverter system through a hot-plug connection line. Each of the external batteries is further connected with the built-in battery through the switching compensation circuit. The inverter system is configured to turn off a charging tube of the built-in battery and turn on a discharging tube of the built-in battery when the electric quantity of the built-in battery is lower than a preset electric quantity. The switching compensation circuit is configured to control the external battery to be connected with the built-in battery when the electric quantity of the built-in battery is lower than the preset electric quantity and the electric quantity of the external battery is higher than the electric quantity of the built-in battery. In this way, the energy storage system provided according to the embodiment of the present application can realize parallel expansion of batteries and hot-plug connection of external batteries so that the system has a simple structure and high safety.

It should be noted that, the embodiments of the device described above are only for illustrative purpose, wherein the units illustrated as separate components may be or may not be physically separated, and components displayed as units may be or may not be physical units. That is, these units and components may be located in one place or distributed over multiple network units. Some or all of the modules may be selected according to actual needs to achieve the objective of the solution of the embodiment.

From the description of the above embodiments, those of ordinary skill in the art may clearly appreciate that each embodiment may be realized by means of software plus a general hardware platform, and of course, it may also be realized by hardware. As shall be appreciated by those of ordinary skill in the art, the implementation of all or part of the processes in the embodiments of the method described above may be completed by instructing related hardware through a computer program, the program may be stored in a computer readable storage medium, and the program may include the processes of the embodiments of the method described above when it is executed. The storage medium may be a magnetic disk, an optical disk, a Read-Only Memory (ROM) or a Random Access Memory (RAM) or the like.

Finally, it shall be noted that, the above embodiments are only used to illustrate the technical solutions of the present application, and are not intended to limit the present application. Under the idea of the present application, technical features in the above embodiments or different embodiments may also be combined, the steps may be implemented in any order, and many other variations in different aspects of the present application as described above are possible For conciseness, these variations are not provided in details. Although the present application has been described in detail with reference to the foregoing embodiments, those of ordinary skill in the art shall appreciate that, the technical solutions described in the foregoing embodiments may still be modified or some of the technical features may be equivalently replaced; and these modifications or replacements do not make the essence of the corresponding technical solutions deviate from the scope of the technical solutions of various embodiments of the present application.

## Claims

1. An expandable energy storage system, being **characterized in that**, the expandable energy storage system comprises:
an inverter system, being provided with a built-in battery;
external batteries, each of which being communicatively connected with the inverter system through a hot-plug connection line;
a switching compensation circuits, each of the external batteriesfurther being connected with the built-in batterythrough the switching compensation circuit;
wherein the inverter system is configured to turn off a charging tube of the built-in battery and turn on a discharging tubeof the built-in battery when the electric quantity of the built-in battery is lower than a preset electric quantity; and
the switching compensation circuit is configured to control the external battery to be connected with the built-in battery when the electric quantity of the built-in batteryis lower than the preset electric quantity and the electric quantity of the external battery is higher than the electric quantity of the built-in battery.

2. The energy storage system according to Claim 1, being **characterized in that**, the switching compensation circuit comprises:
an switching transition compensation module, being connected between the built-in battery and the external battery;
a battery main switch module, being connected between a negative electrode of the built-in battery and a negative electrode of the external battery;
a controller, being connected with a control end of the switching transition compensation module and a control end of the battery main switch modulerespectively, and being configured to control the conduction states of the switching transition compensation module and the battery main switch modulerespectively according to anelectric quantity state of the built-in battery.

3. The energy storage system according to Claim 2, being **characterized in that**, the switching transition compensation module comprises:
a flywheel diode, having a cathode connected between a positive electrode of the built-in battery and a positive electrode of the external battery;
an inductor, having one end connected with an anode of the flywheel diodeand the other end connected with the negative electrode of the external battery;
a unidirectional diode, having an anode connected with one end of the inductor;
a first switch tube, having a drain connected with an cathode of the unidirectional diode, a source connected with the negative electrode of the built-in battery, and a gate connected with the controller,
wherein the controller is configured to drive the first switch tube to be turned on when the electric quantity of the built-in batteryis lower than the preset electric quantity and the electric quantity of the external batteryis higher than the electric quantity of the built-in battery.

4. The energy storage system according to Claim 3, being **characterized in that**, the switching transition compensation module further comprises:
a first resistor, being connected between the source and the gate of the first switch tube;
a second resistor, being connected between the controller and the gate of the first switch tube.

5. The energy storage system according to Claim 3, being **characterized in that**, the battery main switch module comprises:
a second switch tube, having a source connected with the negative electrode of the built-in batteryand a gate connected with the controller, wherein the second switch tubeis configured to be turned on when the external battery charges the built-in battery;
a third switch tube, having a source connected with the negative electrode of the external battery, a gate connected with the controller, and a drain connected with the drain of the second switch tube, wherein the third switch tube is configured to be turned on when the built-in battery supplies power.

6. The energy storage system according to Claim 2, being **characterized in that**, the controller is configured to output a PWM signal to the switching transition compensation module so as to control the conduction state and output voltage of the switching transition compensation module; wherein when the electric quantity of the built-in battery is lower than the preset electric quantity, the controller gradually increases the duty ratio of the PWM signal within a preset time, and controls the battery main switch module to be in a closed state after the duty ratio reaches 100% so that the external battery is completely connected to the inverter system.

7. The energy storage system according to Claim 6, being **characterized in that**, when the external battery is discharged to the extent that the electric quantity thereof is consistent with the electric quantity of the built-in battery, the inverter system controls the charging tube of the built-in battery to be turned on so that the built-in battery and the external battery are connected in parallel.

8. An expansion method of an energy storage system, being **characterized in that**, the expansion method applied to the energy storage system according to any of Claims 1 to 7, comprises:
determining whether the electric quantity of the built-in battery is lower than a preset electric quantity;
turning off a charging tube of the built-in battery and turning on a discharging tube of the built-in battery by the inverter systemwhen the electric quantity of the built-in battery is lower than the preset electric quantity;
determining whether the electric quantity of the built-in battery is lower than the electric quantity of the external battery;
controlling the external battery to be connected with the built-in battery through the switching compensation circuitwhen the electric quantity of the built-in battery is lower than the electric quantity of the external battery.

9. The expansion method according to Claim 8, being **characterized in that**, when at least two external batteries are provided, the method further comprises:
determining whether the electric quantity of the external batterycurrently supplying power is lower than the electric quantity of the built-in battery;
when the electric quantity of the external battery currently supplying power is lower than the electric quantity of the built-in battery, acquiring other external batteries with higher electric quantity than the built-in battery and establishing connection through the switching compensation circuit.

10. The expansion method according to Claim 8, being **characterized in that**, the step of controlling the external battery to be connected with the built-in battery through the switching compensation circuit comprises:
when the electric quantity of the built-in battery is lower than the preset electric quantity, gradually increasing the duty ratio of a PWM signal within a preset time by the switching compensation circuit, and controlling the external batteryto be completely connected to the inverter system by the switching compensation circuit after the duty ratio reaches 100%.
